# EUROPEAN PATENT SPECIFICATION

(11) **EP 1 565 050 B1**
(45) Date of publication and mention of the grant of the patent: **20.08.2008**
(21) Application number: 03775420.7
(22) Date of filing: 21.11.2003
(51) Int. Cl.: A01C 1/06

(54) **COATED SEED AND METHOD FOR COATING SEEDS**
UMHÜLLTE SAMEN UND VERFAHREN ZUR UMHÜLLUNG VON SAMEN
SEMENCE ENROBEE ET PROCEDE D'ENROBAGE DE SEMENCES

(30) Priority: 22.11.2002 FI 20022089
(43) Date of publication of application: 24.08.2005
(73) Proprietor: YARA International ASA, 0202 Oslo (NO)
(72) Inventor: PELTONEN, Jari, FIN-04330 Lahela (FI); SAARIKKO, Eija, FIN-02780 Espoo (FI); WECKMAN, Anders, FIN-02770 Espoo (FI)
(74) Representative: Heikkinen, Esko Juhani
(86) International application number: PCT/FI2003/000895
(87) International publication number: WO 2004/047516

(56) References cited:
- WO-A1-01/45489
- US-A- 4 192 095
- US-A- 5 482 529

## Description

The invention relates to a fertiliser composition for coating plant seeds, comprising an oil/water emulsion or oil/water emulsion suspension and nutrient salts dissolved in the aqueous phase thereof. The invention also relates to plant seeds coated with this composition and to a one-step method for coating seeds.

For various reasons, coating of plant seeds has pertained to known techniques since long. There are various surface treatments, which range from simple conventional treatment of cultivated plants with pesticides for plant disease prevention and pest control. In this case, the seeds as such are treated with a finely ground active ingredient or a powder blend containing this, or the active agent is dissolved or slurried in a suitable solvent, often water or an organic solvent, and the seeds are subsequently treated with the obtained solution or suspension.

The suitability of various polymers for coating has especially been tested. Thus, coating of seeds e.g. with water-soluble polymers, such as starch, methylcellulose or Arabic gum is commonly known. The major drawback here is the large amount of water associated with the use of these polymers. Handling of a large amount of water requires special equipment, and the coating process is slow. In order to prevent damage to the seeds coated with this technique, the seeds often have to be dried at low temperature. Furthermore the polymers mentioned above tend to form a hard fragile coating around the seed.

Seed coating has also been used to delay seed germination (EP 1 238 714, Landec Corp; US 6,230,438, Grow Tec Inc.). Polymers have been used as fixing agents for coating seeds with substances, which have other effects. Coating may improve such properties as the seed resistance to dryness, heat, soil salinity or other external stress factors. With coating e.g. increased weight of light rice seeds is obtained, whereby they do not drift so easily with water or winds (US patent specification 4,192,095). The addition of nutrients to the coating is also a commonly known growth-promoting operation.

The main problems have arisen on one hand from poor seed germination, especially when oil has been used as the fixing agent, and on the other hand from poor nutrient adhesion to the seed surface when aqueous solutions have been used as the fixing agent. There has been abundant research to solve these problems. Various fixing agent compositions have been tried for adhering nutrients or other growth-promoting agents or compositions to the surface of plant seeds.

The rate at which the plant roots reach the fertiliser has a great impact on the plant's capacity to utilise the nutrients of the fertiliser and to grow and develop in the course of the first weeks.

The amount of main nutrients (N, K, P, Ca, S, Mg) passing from the fertilisers to the plants, i.e. the nutrient efficiency, usually varies from a few per cent to 70 to 80 per cent. Especially phosphorus has low efficiency, of the order of 5 to 20% approximately. Trace nutrients (B, Co, Cu, Fe, Mn, Mo, Zn, Cl) often have even lower efficiency.

The manner of spreading the fertiliser, i.e. the distance between the fertiliser and the seed, has an impact on the plant's capacity to utilise nutrients. In a fertiliser placed at a distance from the seed, e.g. 6 cm, the nutrients may have time to react with the salts or ions of the soil and to form poorly soluble compounds before the plant roots have reached the location of the fertiliser.

Root formation is a principal phase in the initial development of plants. A fully developed root system will later be able to make efficient use of nutrients bound in the earth particles. In order to develop, the roots need phosphorus, and the shorter the distance between phosphorus and the seed, the better phosphorus can be utilised.

When phosphorusfertilisation, for instance, is performed as described above in the form of conventional broadcast fertilisation on the surface of the soil or as mixed into the earth surface layer, the efficiency of phosphorus is 5 to 10%. If fertilisation is performed as row or strip spreading at a given distance from the seed, the efficiency of phosphorus will be approx. 10%.

Slightly better efficiency of phosphorus is achieved if the phosphorfertiliser is placed in the immediate vicinity of the seed, or if the seed is coated with the fertiliser. The efficiency rates are then 15% and 20%, respectively.

A patent publication WO9325078 describes a composition used for seed coating, which contains a polysaccharide hydrolysate, e.g. carboxy-methyl cellulose or carboxy-methyl starch hydroxylate. Aqueous solutions of these substances can be sprayed also in the form of relatively concentrated aqueous solutions (30%) onto the seed surface.

On the other hand the use of polymers that are insoluble in water, requires normally the use of an organic solvent, whereby a high amount of solvent may enhance the penetration of the polymer into the seed. Water suspensions of these polymers can also be used for seed treatment. The references CA PLUS 112:17756 (PL 146138) and CA PLUS 122:49097 (PL 159474) describe such an application.

US patent 4, 251, 952 describes a seed that has been coated with a mixture of water-insoluble polymer and sugar. The polymers used here are various commercially available polymers or copolymers.

Besides the drawbacks mentioned above, known methods may have a further disadvantage of providing a sticky surface to the coated seeds, resulting in seeds which adhere to each other and in seeds with poor flow ability. Furthermore, the equipment for seed treatment foul easily. On the other hand, a coating with excessive moisture may entail premature germination of the seeds.

The applicant's patent publication WO014548 discloses a seed coating formed of two components, in which the first component comprises an aqueous fixing agent, which contains a liquid agricultural or fermentation by-product, especially molasses, and emulsified oil, and in which the second component comprises a fertiliser powder. The technique described in this reference will be referred to below as iSeed seed treatment or iSeed method.

The applicant's unpublished patent application FI20011328 describes the optimal fertiliser and fertiliser amount for different plants species, which, in interaction with an aqueous fixing agent, produces the optimal combined effect between the sprouting percentage and the phosphorus intake.

Even though growth results under field conditions have been good, phosphorus utilisation has been enhanced and the overall need of phosphorus fertilisation has diminished, some problems have still been observed in practice.

The requirement of grinding the fertiliser raw material to adequate fineness has caused problems. Besides, grinding as such is a supplementary and problematic process step. Some of the salts cannot be ground, due to their hygroscopicity or crystal water, for instance. In addition, finely divided fertiliser powder causes dusting. As seeds are chafed against each other, part of the fertiliser may detach from the seed surface if the grinding is inhomogeneous and/or the particle size is even slightly larger than normally.

The coating method described in FI20011328 requires the fertiliser to be ground to high fineness (< 50 µm) for the particles to remain adhered to the fixing agent on the seed surface. In a method, wherein the fixing agent is first added to the seeds and then the fertiliser, the ratio between the fixing agent and fertiliser may vary from one seed to another. As a result, fertiliser dust may easily detach from the coated seeds during their treatment, which may have an effect on dosing of seeds in the seeding machine. In soil the detached portion of the fertiliser may end up either too far from the seed or may cause over dosage of the fertiliser at the location of an individual seed. Dust that is formed in the seed treatment is also experienced as detrimental in terms of occupational hygiene.

A controlled soluble fertiliser preparation that enhances phosphorus yield is known in the prior art (US 5,482,529) and is in the form of an emulsion suspension or an emulsion and comprises: 30 to 90% by weight of compounds containing plant nutrients, 5 to 50% by weight of water, 2 to 20% by weight of an oleophilic organic substance and 1 to 25% by weight of a surface-active agent, and also 0.10 to 10% by weight of acid, or a mixture, salt or anhydride thereof.

The suggested form of spreading the emulsion or suspension fertilisers has been local earth spreading. This method has the inconvenience of requiring the use of a special local spreading apparatus and packages suitable for the handling of liquids. Due to the special treatments, the sales price of the emulsion or suspension fertiliser will be markedly higher than that of a corresponding granular product. In normal field applications, higher performance does not always cover additional cost.

In this case as well, the fertiliser is added in a finely ground form to the suspension. To achieve the correct particle size, high-cost wet-grinding in a ball mill has typically been used. In paste form, the viscosity of the fertiliser tends to rise too much for the fertiliser to be applicable to seed coating.

The closer the fertiliser to the seed, the smaller the amount needed. The fertiliser may be placed as a "starter" in the seed row, however, it will be especially effective when placed on the surface of the seed. A seed that has been coated with emulsion or suspension fertiliser is an efficient and economical means of locally spreading the fertiliser.

### Brief description of the invention

The present invention relates to a coated plant seed comprising a seed, whose surface is coated with a homogeneous coating composition in the form of an emulsion or an emulsion suspension, which coating composition contains a nutrient, water, oil and a surface-active agent, and optionally sugar.

The invention also relates to the use of said coating composition for coating seeds and to a method for coating seeds in one single step using said coating composition. If necessary, the seeds can be air-dried.

### Detailed description of the invention

The invention is based on the finding that it is not necessary to form first a film of a fixing agent on the surface of the seeds before a plant nutrient is added, but the plant nutrient can surprisingly be combined with a fixing agent which is in the form of an emulsion of water and oil, and in this way be subjected in direct contact with the surface of seedy.

In accordance with the present invention, a coated plant seed is provided, which comprises a seed that is coated with a water and oil containing coating composition in the form of an emulsion or an emulsion suspension, which coating composition comprises a mixture of a plant nutrient and fixing agent. The plant nutrient preferably contains phosphate salt.

Furthermore, according to the invention the seeds are coated with a coating composition which is in the form of a water and oil containing emulsion or emulsion suspension and which comprises a mixture of a plant nutrient and a fixing agent.

By forming an emulsion or an emulsion suspension from the oil, water, surface-active agent and plant nutrient, i.e. fertiliser, one can ensure that the fertiliser and the fixing agent are homogenously distributed in the coating and that they have the same ratio in each seed. In this way, the detachment of fertiliser from the seed can be minimised.

The fertiliser may be dissolved in the aqueous phase of the emulsion or the emulsion suspension, thus contributing to homogenous distribution of the fertiliser in the coating.

The fertiliser detachment as determined by the dusting test described below is preferably not more than 2% by weight and more preferably not more than 1.5% by weight of the amount of the added fertiliser.

The coating composition of the invention preferably comprises
a) 40 to 70% by weight of plant nutrient containing a phosphate salt,
b) 0.5 to 15% by weight of oil
c) 0.1 to 15% by weight of W/O surface-active agent
d) 10 to 45% by weight of water,
e) 0 to 25% by weight of sugar and
f) 0 to 10% by weight of pH-regulating agent.

When using the ratio of oil and water given in the above composition, i.e. 0.5 to 15% by weight of oil and 10 to 45% by weight of water, a particularly preferable stability and/or germination properties of the coated seeds are achieved.

In general, the coating composition of the invention may comprise sugar 0 to 25% by weight, such as 0.5 to 25% by weight. According to a preferable embodiment the coating composition, e.g. the composition described above, comprises sugar up to 25% by weight, preferably 0.5 to 25% by weight. Said amount of sugar is preferred in view of the stability of the coated seeds.

The term "stability" means herein mainly the stability of the qualitative properties of the coating. The coated seeds are non-caking, the fertiliser does not detach from the coating and thus no dust is formed from the product. Said "stability" also means that the seeds remain vital.

More preferably, the coating composition of the invention comprises
a) 50 to 60% by weight of plant nutrient containing phosphate salt,
b) 1 to 10% by weight of oil
c) 0.5 to 10% by weight of W/O surface-active agent
d) 15 to 40% by weight of water,
e) 0.5 to 25% by weight of sugar and
f) 0 to 10% by weight of pH-regulating agent.

The coating composition has a pH preferably in the range from 4 to 7. A good germination can be achieved with seeds which are coated with a coating composition having a pH within the given pH range. Additionally, the seeds coated with such coating composition possess good flowability properties. More preferably, the pH of the coating composition is between 5 to 7.

The coating composition is preferably in the form of an emulsion or a paste.

With a view to spreading properties, the coating composition should have sufficiently low viscosity, i.e. not more than 10,000 mPas, preferably not more than 3,000 mPas, under the used coating conditions. The viscosity may be e.g. 500 to 3,000 mPas. The temperature under the coating conditions may be e.g. 20 to 40 °C.

Said oil may be a mineral oil or an organic oil. The mineral oil may be e.g. white oil. The organic vegetable oils include e.g. rapeseed oil, linseed oil, olive oil, colza oil, soya oil, sunflower oil, palm oil, coconut oil or maize oil.

Suitable surface-active agents are e.g. lecitine, lignosulphonate or esters of a fatty acid and polyol.

Sugar can be added in amounts indicated above to the coating composition of the invention. Sugar may also be separately added. The solidification property of sugars is beneficial in seed coating. Viscosity of such tixotropic substances is advantageous in the mixtures of the invention. The emulsion or the suspension can thus be easily spread onto the seed surface, wherein it solidifies and binds the fertiliser components. Suitable sugars include e.g. saccharose, glucose, maltose, lactose, fructose and mixtures thereof, as well as other sugars mentioned in said US patent specification. Since the coating composition also contains water, besides sugar, one may also use sugar-containing agricultural or fermentation by-products, such as molasses, vinasses or syrup, such as maltose syrup, or mixtures thereof. Especially advantageously, the coating composition contains molasses or saccharose or syrup, or a mixture thereof. The total amount of sugar is preferably 10 to 20% by weight.

The oil component, surface-active agent and/or acid, if present, in the coating composition, may be replaced partly with molasses. Molasses as such contains about 40 to 50% by weight of sugar, 5 to 10% by weight of various organic acids and 5 to 10% by weight of protein (F.O. Lichts Internationaler Melasse- und Alkoholbericht 32, Jahrgang Nr. 8, 10 May 1995, p. 111 to 115).

The pH regulating agent mentioned above, which is used to adjust the pH of the coating composition preferably to pH-value of 4 to 7, more preferably to pH of 5 to 7, may be an acid or a base. The acid may be an inorganic acid, such as nitrogen or phosphoric acid, or an organic acid, such as C₁-C₁₀-monocarboxylic acid, hydroxycarboxylic acid or dicarboxylic acid, or an anhydride or a mixture thereof, or any other acid mentioned in said US patent 5,482,529. The base may be e.g. sodium or potassium hydroxide.

Said plant nutrient contains preferably phosphate. A preferred phosphate salt is monosodium, monopotassium or monoammonium phosphate. The plant nutrient may also be a nutrient blend containing one or more phosphate salts. The nutrient or nutrient blend may also be formed from phosphoric acid and various bases. The phosphoric acid may be any concentrated phosphoric acid, especially phosphoric acid of fertiliser grade, from which fluorine has been removed. The bases may be oxides, hydroxides or carbonates, or combinations thereof, e.g. KOH, NaOH, K₂CO₃, Na₂CO₃, NH₃, CaO, MgO, CaCO₃ or CaMg(CO₃)₂.

Besides phosphate, any essential inorganic ions (primary, secondary or trace nutrients) may be included as nutrient components, and also nutrient-releasing organic compounds such as urea or methylene urea. Other growth-promoting agents such as pesticides or growth regulators can further be added to the emulsion or emulsion suspension.

The coating composition may also contain other conventional ingredients, such as a preserving and/or stabilising agent.

The size of the seeds to be surface-treated and the surface properties thereof, which are specific for each plant species, determine the suitable composition and applied amount of the emulsion or emulsion suspension. The preferred amounts are 0.5 to 25 parts by weight of emulsion or emulsion suspension per 100 parts by weight of seeds. Especially advantageous amounts are 1 to 15 parts by weight of emulsion or emulsion suspension per 100 parts by weight of seeds.

In accordance with the invention, a method for coating seed is also provided, in which method the seeds to be coated are subjected to an equipment suitable for the seed treatment and a water and oil containing coating composition in the form of an emulsion or emulsion suspension is added, which composition comprises a mixture of plant nutrient and fixing agent, in order to form a coating on the surface of the seeds.

In one preferred embodiment of invention for coating seeds with a fertiliser emulsion or paste is dosing the seeds into a rotating drum, spraying the fertiliser emulsion or paste among the mixed seeds and further mixing the seeds to ensure a homogenous coating to be obtained. When using high amounts of the coating or of aqueous emulsions, the seeds can finally be dried in an air flow.

When compared with the prior art, one of the advantages achieved with the invention is that the coating can be effected easier in one single step by means of the single liquid composition, over to the two-step coating with a liquid fixing agent and a solid fertiliser powder (iSeed seed treatment). The invention also provides an improved adherence of the fertiliser to the seed, especially when sugar is added to the emulsion or emulsion suspension.

In accordance with the invention, adjusting the viscosity of the emulsion or emulsion suspension can easily be controlled by means of temperature or by addition of a small amount of water. This will be necessary in coating devices requiring <500 mPas viscosity. The emulsion or emulsion suspension can be pumped when the viscosity is less than 10,000 mPas, preferably less than 3,000 mPas.

Furthermore the invention enables the preparation of the emulsion directly from an acid and a base, so that no grinding is necessary and the composition is not bound to specific grindable solid salts, but can be subjected to stepless adjustment. Thus the coating of the present invention enables the selection of the plant nutrient(s) from a broader group of usable nutrient salts, e.g. from the conventional plant nutrient salts, or they can be formed during the formation of the coating by using corresponding acids and bases.

The pH of the coating composition can be adjusted flexibly, depending on the requirements of the plant species and/or soil type.

The invention provides more flexibility to the addition of the nutrients in connection with seed coating. The composition and the pH are not bound to the raw materials, because acid and base components can also be added. In addition, the composition is more economical, as fertiliser salts can be replaced with acids and bases containing nutrients (e.g. phosphoric acid or potassium hydroxide).

With the use of an emulsion, costly grinding can be avoided. No special mills are needed for grinding in an emulsion suspension, because, owing to the adequate water amount, larger crystals are dissolved or reduced in the course of preparation.

The emulsion or emulsion suspension has a uniform nutrient/fixing agent ratio. The detachment of nutrients from the seed is reduced because there are no more separate fertiliser particles on the surface. Any problems relating to salt burning have also been eliminated when nutrient salts are not accumulated on the sensitive seed surfaces.

After germination, the coated seed supplies the plant roots with the phosphorus they need. Phosphorus on the seed surface provides a clearly better way for the important initial development of the plant compared with locally spread fertilisation, and additionally more efficiently compared with starter fertilisation in a seed row. Excellent nutrient efficiency is profitable for the cultivator, and it also ensures that extra nutrient loads do not burden the nature, because with the coating of the present invention less amounts of the fertiliser are required. After good initial development, the plant is also able to efficiently utilise the nutrients previously bound in the soil.

The following examples are intended as a detailed description of the invention. The percentages and parts are per cent by weight or weight parts, unless indicated otherwise.

### EXAMPLES

Comparative examples 1 and 2 illustrate the prior art, whereas examples 1 to 5 illustrate the present invention. The following fixing agents were used in the comparative examples and the examples:
**Fixing Agent A** with the following composition:
   50% of molasse blend (44% of sugar, 25% of water)
   10% of mineral oil,
   3.1 % of emulsifying agent,
   0.6% of stabilising agent, and
   36.3% of water
   and the dry matter content was approx. 51 %.
**Fixing Agent B** with the following composition:
   45% of molasse blend (44% of sugar, 25% of water)
   9% of mineral oil,
   2.8% of emulsifying agent,
   0.54% of stabilising agent,
   10% of saccharose
   32.7% of water.
**Fixing Agent C** with the following composition:
   49% of molasse blend (44% of sugar, 25% of water)
   9.8% of mineral oil,
   3.0% of emulsifying agent,
   0.58% of stabilising agent,
   2.5% of maltose syrup
   35.4% of water.

The detachment of the fertiliser, i.e. the dusting of the coated seeds, has been determined by the method intended for granular fertilisers. The method comprises fluidisation of 400 g of coated seeds in an air flow in a tube. The dust entrained by the air flow is collected on a filter. The dust amount detached from an uncoated seed in a similar treatment is reduced from the dust amount. The result is indicated as per cent of the amount of the fertiliser used in coating.

### Comparative example 1

### Crop production capacity of oat seeds with the use of prior art fertilising methods

During the growing season 2002, a test series was made for comparing the crop production capacity of oat seeds treated with iSeed seed coating with a granular "starter fertilisation" applied in a seed row. The test compared the crop formation of plants with phosphorus applied in seed coating and phosphorus amounts applied as starter fertilisation. The basic fertilisation regarding nitrogen and potassium had been performed in accordance with a soil fertility study.

iSeed seed coating stands for the treatment described in the applicant's patent publication WO0145489, in which seeds are first treated with fixing agent A in order to form a fixing agent layer on the seed surface and subsequently with ground monopotassium phosphate (MKP).

In five tests of six, the plants cultivated with the prior art seed treatment did not have notably different crop production capacity compared to granular "starter fertilisation", which was richer in phosphorus and was applied in a seed row. In one test of six, the crop formation decreased significantly, by 400 to 800 kg. At this test site the phosphorus condition of the soil had very poor classification. The test results are given in Table 1.

**Table 1**

| Effect of different fertilising methods on oat crop production 2002 | | | | | | |
|---|---|---|---|---|---|---|
| **Crop production tons/ha** | **Test 1** | **Test 2** | **Test 3** | **Test 4** | **Test 5** | **Test 6** |
| iSeed seed treatment 2 kg P/ha | 4.4 | 5.7 | 5.9 | 5.7 | 5.9 | 6.5 |
| Starter fertilisation in seed row 5 kg P/ha | 4.4 | 5.7 | 5.6 | 6.1 | 5.9 | 6.7 |
| Starter fertilisation in seed row 10 kg P/ha | 4.4 | 5.7 | 5.7 | 6.5 | 6.1 | 6.7 |
| Significance | NS | NS | NS | *** | NS | NS |

| | | | | | | |
|---|---|---|---|---|---|---|
| NS = no significant difference ***= significance with 99,9% probability | | | | | | |

The second test series was a closer study of the partitioning of phosphorus fertilisation in starter fertilisation into a seed row and applied onto the seed surface using the iSeed method. This test series compared the impact of iSeed seed treatment in crop production in soil poor in phosphorus by dividing phosphorus starter fertilisation in a seed row either into five and ten, or ten and twenty kilogram of phosphorus, respectively, and the iSeed method alone or together with a smaller starter fertiliser batch was compared to a larger phosphorus batch. The test results are shown in Table 2.

**Table 2**

| Phosphorus partition test by the seed coating method of iSeed using granular fertiliser applied as starter fertilisation in a seed row. The test arrangement was the same as in table 1 in other respects. | |
|---|---|
| **Crop production tons/ha** | **Test 1** |
| Starter fertilisation 5 kg P/ha | 5.6 |
| Starter fertilisation 5 kg P/ha + iSeed seed treatment | 6.2 |
| Starter fertilisation 10 kg P/ha | 5.7 |

| Crop production tons/ha | Test 2 |
|---|---|
| Starter fertilisation 10 kg P/ha | 4,7 |
| Starter fertilisation 10 kg P/ha + iSeed seed treatment | 5.2 |
| Starter fertilisation 20 kg P/ha | 5.1 |

| Crop production tons/has | Test 3 |
|---|---|
| Starter fertilisation 10 kg P/ha | 4.1 |
| Starter fertilisation 10 kg P/ha + iSeed seed treatment | 4.6 |
| Starter fertilisation 20 kg P/ha | 4.1 |

These test results indicated that a batch division of phosphorus fertilisation into iSeed seed treatment and half of the conventional start fertilisation batch yielded a better result than the largest amount of applied start fertilisation. In other words, the iSeed method allowed a decrease of the use of phosphorus fertilisation even in soil classified as poor in phosphorus.

### Comparative example 2

### Impact of sugar and maltose syrup addition on the detachability and germination of the fertiliser with fertiliser-coated oat and rapeseed seeds

Oat was coated with iSeed seed treatment by first treating the seeds with fixing agent A or with fixing agent B in order to form a fixing agent layer on the seed surface, and subsequently with monopotassium phosphate (MKP). Table 3 shows the results of the two tests.

Accordingly, rapeseed was coated with iSeed seed treatment, in other words by first treating the seeds with fixing agent A, fixing agent B or fixing agent C, in order to form a fixing agent layer on the seed surface, and subsequently with ground monopotassium phosphate (MKP). Table 4 shows the results of the two tests.

**Table 3**

| | **Test 1, no coating** | **Test 1, coating with fixing agent A** | **Test 2, no coating** | **Test 2, coating with fixing agent B** |
|---|---|---|---|---|
| MKP,% of the weight of the seeds | 0 | 3 | 0 | 3 |
| Fixing agent A,% of the weight of the seeds | 0 | 2 | 0 | 1.8 |
| Saccharose addition,% of the weight of the seeds | 0 | 0 | 0 | 0.2 |
| Total sugar content,% of the weight of the seeds | 0 | 0.44 | 0 | 0.60 |
| Germination,% as average of the three replicates | 94 | 94 | 96 | 96 |
| Fertiliser detachability,% of the amount of the added fertiliser addition | 0 | 17 | 0 | 9.5 |

The test results shown in table 3 indicate that the addition of sugar as saccharose to the fixing agent enhances the adhesion of the fertiliser to the seed, i.e. prevents the detachment of the fertiliser from the seed.

**Table 4**

| | **Test 1, no coating** | **Test 2, coating with fixing agent A** | **Test 1, coating with fixing agent B** | **Test 2, coating with fixing agent C** |
|---|---|---|---|---|
| MKP,% of the weight of the seeds | 0 | 4 | 4 | 4 |
| Fixing agent A,% of the weight of the seeds | 0 | 4 | 3.6 | 3.9 |
| Saccharose/maltose syrup addition,% of the weight of the seeds | 0 | 0 | 0.4 | 0.1 |
| Total sugar content, % of the weight of the seeds | 0 | 0.88 | 1.19 | 0.94 |
| Germination,% as average of three replicates | 93 | 94 | 92 | 99 |
| Fertiliser detachability,% of the amount of the added fertiliser | - | 12 | 2 | 2 |

The test results shown in table 4 indicate that sugar addition in the form of saccharose or maltose syrup to the fixing agent improves the fertiliser adherence to the seed, in other words, prevents fertiliser detachment from the seed.

### Example 1

### Fertiliser detachment from oat and rapeseed seeds coated in accordance with the invention

Oat and rapeseed were coated with the seed treatment of the invention, in other words, by coating the seeds with a paste mixed in advance and consisting of monopotassium phosphorus powder, fixing agent A and saccharose. The amount of substance used in the test and the test results are shown in table 5.

**Table 5**

| | **Uncoated oat** | **Paste-coated oat** | **Uncoated rapeseed** | **Paste-coated rapeseed** |
|---|---|---|---|---|
| MKP,% of the weight of the seeds | 0 | 3 | 0 | 4 |
| Fixing agent A,% of the weight of the seeds | 0 | 1.7 | 0 | 3.4 |
| Saccharose addiction, % of the weight of the seeds | 0 | 0.3 | 0 | 0.6 |
| Total sugar content,% of the weight of the seeds | 0 | 0.67 | 0 | 1.35 |
| Water in the coating% by weight | 0 | 16.7 | 0 | 20.8 |
| Fertiliser detachability,% of amount of the added fertiliser | 0 | 1.3 | 0 | 0.8 |

These test results indicate that fertiliser detachment is further decreased when the fertiliser powder is added to the fixing agent together with saccharose and the seeds are coated with this blend. Thus, a comparison of the results of tables 3 and 5 shows that oat seeds coated with the iSeed method showed detachability of 9.5%, whereas the oat seeds coated with the method of the invention showed detachability of only 1.3%. Accordingly, a comparison of the results of tables 4 and 5 shows that rapeseed seeds coated with the iSeed method showed 2% detachment, whereas the rapeseed seeds of the invention showed only 0.8% detachment.

### Example 2

This example studied the viscosity of the previously prepared paste of the invention as a function of temperature. Pastes were formed from the fixing agent A, saccharose and the ground MKP using different ratios; paste A (1:1), paste B (4:5) and paste C (2:3). The viscosity was determined as a function of the temperature and the composition.

The composition of paste A (1:1) was 50 parts of fertiliser, 42.5 parts of the fixing agent A and 7.5 parts of saccharose.

The composition of paste B (4:5) was 55.6 parts of fertiliser, 37.8 parts of the fixing agent A and 6.7 parts of saccharose.

The composition of paste C (2:3) was 60 parts of fertiliser, 34 parts of the fixing agent A and 6 parts of saccharose.

The results are shown in table 6.

**Table 6**

| | | **Water content of paste, %** | **Total sugar content of paste, %** | **Viscosity at 5°C, mPas** | **Viscosity at 20 °C, mPas** | **Viscosity at 40°C, mPas** |
|---|---|---|---|---|---|---|
| Paste | A | 20.8 | 16.9 | 4000 | 3000 | 1900 |
| (1:1) | | | | | | |
| Paste | B | 18.5 | 15.0 | 5-6000 | 5-6000 | 2200 |
| (4:5) | | | | | | |
| Paste | C | 16.7 | 13.5 | >10000 | >10000 | 3000 |
| (2:3) | | | | | | |

These test results show that a small water addition reduces the viscosity significantly. Respectively, a temperature raise reduces the viscosity.

### Example 3

An emulsion was prepared by combining 60 parts of 55% P₂O₅ defluorinated fertiliser grade phosphoric acid, 24 parts of solid NaOH, 13.6 parts of the fixing agent A and 2.4 parts of saccharose. This emulsion had a pH of 6, a total sugar content of 5.4%, a Na-phosphate content of 58.8% and a water content of 31 %. Oat, rapeseed and wheat seeds were coated with this emulsion by dosing the emulsion on the seeds so that the amount of sodium phosphate (molar ratio Na/P = 1.3) was 3% of the weight of the seeds. Germination tests showed good germination, i.e. of the same order as that of uncoated seeds. Fertiliser detachability tests showed a very low degree of detachment.

### Example 4

A fertiliser emulsion was prepared by dissolving monosodium phosphate (Bolifor MSP, feed grade, 20% of Na, 24% of P) and a fixing agent A in weight ratio 1:1. Bolifor MSP is prepared from fertiliser grade defluorinised phosphoric acid and sodium hydroxide or sodium carbonate. The emulsion had a pH of 5.9 and contained 24.5% of water and 11 % of sugar. The emulsion remained homogeneous during cold storage (5°C, 1 week). After heating to about 20 °C, the viscosity of the emulsion was suitable (approx. 2-3000 mPas) for coating. The emulsion was dosed on oat seeds so that the amount of MSP was 3% of the weight of the seeds. A germination test carried out with oat showed that the germination was maintained. In fertiliser detachment tests 2.0% by weight of the fertiliser was detached from coated seeds.

### Example 5

Emulsions were prepared from rapeseed oil and soya lecithin using sodium phosphate (A) and (C) and a paste using MKP powder (B). The emulsion (A) was prepared from unground monosodium phosphate and sodium hydroxide, and it contained 54.4% of Na-phosphate (molar ratio Na/P=1.3), 36.7% of water, 4.4% of rapeseed oil and 4.4% of soya lecithin. Paste (B) contained 55% of MKP powder, 25% of water, 10% of rapeseed oil and 10% of soya lecithin. The emulsion (C) was prepared from concentrated defluorinated phosphoric acid (55% of P₂O₅) and sodium hydroxide and it contained 54.7% of sodium phosphate (molar ratio Na/P = 1.3), 36.5% of water, 4.4% of rapeseed oil and 4.4% of soya lecithin. The pH values of the coatings were (A) pH 6.9, (B) pH 4.2 and (C) pH 6.2, respectively. Oat was coated with 3% of the particular fertiliser. A germination test showed that the good germination was maintained.

### Example 6

Tjalve wheat, treated with a seed disinfectant (Celest) and having the weight of 1000 seeds of 39.3 g, was used in this phosphorus-coating experiment and the germination was determined.

One lot was coated using 6.5% paste A (wherein pH 3,45 and 10.6% of P), the second lot using 6.4% paste B (wherein pH 5.71 and 10.7% of P), and uncoated disinfected seeds were used as the control.

Paste A had a pH of 3.45 and the composition: 31.0% fixing agent A, 24.86% NaOH-KOH solution and 44.3% of phosphoric acid (55% of P₂O₅).

Paste B had a pH of 5.71 and the composition: 29.1% fixing agent A, 29.5% NaOH-KOH solution, 41.4% phosphoric acid (55% of P₂O₅).

The fixing agent A has been described above, on page 11.

NaOH-KOH solution comprised 25 parts of NaOH (100%), 35 parts of KOH (88%) and 40 parts of water. As the source of phosphorus, phosphoric acid of fertiliser grade was used.

After the coating step the flowability of the seeds coated with the paste B was good.

The dry seeds were sowed in series of four pots, and after 10 days the average germination was calculated therefrom. The results of the germination of Tjalve wheat after 10 days: The germination of the control was 94%, the germination with paste A was 80.8% and the germination with paste B was 94.8%.

## Claims

1. Coated plant seed, **characterised in that** it comprises a plant seed and a coating composition comprising a mixture of 40-70% by weight of a plant nutrient containing a phosphate salt, and a fixing agent, the composition having a pH between 5 and 7 and also being in the form of an emulsion of water and oil or an emulsion suspension of water and oil.

2. Coated seed as defined in claim 1, **characterised in that** the coating compositon contains
a) 40-70% by weight of a plant nutrient containing a phosphate salt,
b) 0.5-15% by weight of oil
c) 0.1-15% by weight of W/O surface-active agent
d) 10-45% by weight of water,
e) 0-25% by weight of sugar and
f) 0-10% by weight of pH regulating agent.

3. Coated seed as defined in claim 1 or 2, **characterised in that** the coating composition contains
a) 50-60% by weight of a plant nutrient containing a phosphate salt,
b) 1-10% by weight of oil
c) 0.5-10% by weight of W/O surface-active agent
d) 15-40% by weight of water,
e) 0.5-25% by weight of sugar and
f) 0-10% by weight of pH regulating agent.

4. Coated seed as defined in any of claims 1 to 3, **characterised in that** the coating composition contains 10 to 20% by weight of sugar.

5. Coated seed as defined in any of claims 1 to 4, **characterised in that** the viscosity of the coating composition is not more than 10,000 mPas, preferably not more than 3,000 mPas, under the coating conditions in question.

6. Coated seed as defined in any of claims 1 to 5, **characterised in that** it contains 0.5-25% by weight of the coating composition relative to the weight of the seed.

7. Coated seed as defined in any of claims 1 to 6, **characterised in that** it contains 1-15% by weight of the coating composition relative to the weight of the seed.

8. **Use** of a water and oil containing coating composition in the form of an emulsion or an emulsion suspension, which coating composition comprises a mixture of 40-70% by weight of a plant nutrient containing a phosphate salt, and a fixing agent, for coating a plant seed wherein said emulsion or said emulsion suspension has a pH of between 5 and 7.

9. A method for coating seeds, **characterised in that**
a) seeds to be coated are subjected in an equipment suitable for a seed treatment, and
b) a water and oil containing coating composition in the form of an emulsion or an emulsion suspension, which coating composition comprises a mixture of 40-70% by weight of a plant nutrient containing a phosphate salt, and a fixing agent, is added to form a coating on the seed surface.

## Patentansprüche

1. Beschichteter Pflanzensamen, **dadurch gekennzeichnet, daß** er einen Pflanzensamen und eine Beschichtungszusammensetzung umfaßt, die eine Mischung aus 40 bis 70 Gew.% eines Pflanzennährstoffes, der ein Phosphatsalz enthält, und einem Fixiermittel umfaßt, wobei die Zusammensetzung einen pH-Wert zwischen 5 und 7 hat und in Form einer Wasser/Öl-Emulsion oder einer Wasser/Öl-Emulsionssuspension vorliegt.

2. Beschichteter Samen gemäß Anspruch 1, **dadurch gekennzeichnet, daß** die Beschichtungszusammensetzung folgendes enthält:
a) 40 bis 70 Gew.% eines Pflanzennährstoffes, der ein Phosphatsalz enthält,
b) 0,5 bis 15 Gew.% Öl
c) 0,1 bis 15 Gew.% eines W/O-Tensids,
d) 10 bis 45 Gew.% Wasser,
e) 0 bis 25 Gew.% Zucker und
f) 0 bis 10 Gew.% eines pH-regulierenden Mittels.

3. Beschichteter Samen gemäß Anspruch 1 oder 2, **dadurch gekennzeichnet, daß** die Beschichtungszusammensetzung folgendes enthält:
a) 50 bis 60 Gew.% eines Pflanzennährstoffes, der ein Phosphatsalz enthält,
b) 1 bis 10 Gew.% Öl
c) 0,5 bis 10 Gew.% eines W/O-Tensids,
d) 15 bis 40 Gew.% Wasser,
e) 0,5 bis 25 Gew.% Zucker und
f) 0 bis 10 Gew.% eines pH-regulierenden Mittels.

4. Beschichteter Samen gemäß mindestens einem der Ansprüche 1 bis 3, **dadurch gekennzeichnet, daß** die Beschichtungszusammensetzung 10 bis 20 Gew.% Zucker enthält.

5. Beschichteter Samen gemäß mindestens einem der Ansprüche 1 bis 4, **dadurch gekennzeichnet, daß** die Viskosität der Beschichtungszusammensetzung unter den fraglichen Beschichtungsbedingungen nicht größer ist als 10.000 mPa·s, vorzugsweise nicht größer als 3.000 mPa·s.

6. Beschichteter Samen gemäß mindestens einem der Ansprüche 1 bis 5, **dadurch gekennzeichnet, daß** er 0,5 bis 25 Gew.% von der Beschichtungszusammensetzung, bezogen auf das Gewicht des Samens, enthält.

7. Beschichteter Samen gemäß mindestens einem der Ansprüche 1 bis 6, **dadurch gekennzeichnet, daß** er 1 bis 15 Gew.% von der Beschichtungszusammensetzung, bezogen auf das Gewicht des Samens, enthält.

8. Verwendung einer Wasser und Öl enthaltenden Beschichtungszusammensetzung in Form einer Emulsion oder Emulsionssuspension, wobei die Beschichtungszusammensetzung eine Mischung aus 40 bis 70 Gew.% eines Pflanzennährstoffes, der ein Phosphatsalz enthält, und einem Fixiermittel umfaßt und wobei die Emulsion oder Emulsionssuspension einen pH-Wert zwischen 5 und 7 hat, zur Beschichtung eines Pflanzensamens.

9. Verfahren zur Beschichtung von Samen, **dadurch gekennzeichnet, daß**
a) die zu beschichtenden Samen in eine für die Behandlung von Samen geeigneten Anlage eingeführt werden, und
b) eine Wasser und Öl enthaltende Beschichtungszusammensetzung in Form einer Emulsion oder einer Emulsionssuspension, wobei die Beschichtungszusammensetzung eine Mischung aus 40 bis 70 Gew.% eines Pflanzennährstoffes, der ein Phosphatsalz enthält, und einem Fixiermittel umfaßt, und die Emulsion oder Emulsionssuspension einen pH-Wert zwischen 5 und 7 hat, hinzugefügt wird, wodurch auf der Samenoberfläche eine Beschichtung gebildet wird.

## Revendications

1. Graine de plante enrobée, **caractérisée en ce qu'**elle comprend une graine de plante et une composition d'enrobage comprenant un mélange de 40 à 70 % en poids d'un nutriment pour plante contenant un sel de phosphate, et un agent de fixation, la composition ayant un pH de 5 à 7, et étant également sous la forme d'une émulsion d'eau et d'huile, ou d'une suspension émulsifiée d'eau et d'huile.

2. Graine enrobée telle que définie dans la revendication 1, **caractérisée en ce que** la composition d'enrobage contient :
a) de 40 à 70 % en poids d'un nutriment pour plante contenant un sel de phosphate,
b) de 0,5 à 15 % en poids d'une huile,
c) de 0,1 à 15 % en poids d'un agent tensio-actif E/H,
d) de 10 à 45 % en poids d'eau,
e) de 0 à 25 % en poids d'un sucre, et
f) de 0 à 10 % en poids d'un agent de régulation de pH.

3. Graine enrobée telle que définie dans la revendication 1 ou 2, **caractérisée en ce que** la composition d'enrobage contient :
a) de 50 à 60 % en poids d'un nutriment pour plante contenant un sel de phosphate,
b) de 1 à 10 % en poids d'une huile,
c) de 0,5 à 10 % en poids d'un agent tensio-actif E/H,
d) de 15 à 40 % en poids d'eau,
e) de 0,5 à 25 % en poids d'un sucre, et
f) de 0 à 10 % en poids d'un agent de régulation de pH.

4. Graine enrobée telle que définie dans l'une quelconque des revendications 1 à 3, **caractérisée en ce que** la composition d'enrobage contient de 10 à 20 % en poids d'un sucre.

5. Graine enrobée telle que définie dans l'une quelconque des revendications 1 à 4, **caractérisée en ce que** la viscosité de la composition d'enrobage n'est pas supérieure à 10 000 mPa.s, de préférence, non supérieure à 3000 mPa.s, dans les conditions d'enrobage concernées.

6. Graine enrobée telle que définie dans l'une quelconque des revendications 1 à 5, **caractérisée en ce qu'**elle contient de 0,5 à 25 % en poids de la composition d'enrobage par rapport au poids de la graine.

7. Graine enrobée telle que définie dans l'une quelconque des revendications 1 à 6, **caractérisée en ce qu'**elle contient de 1 à 15 % en poids de la composition d'enrobage par rapport au poids de la graine.

8. Utilisation d'une composition d'enrobage contenant de l'eau et une huile, sous la forme d'une émulsion ou d'une suspension émulsifiée, cette composition d'enrobage comprenant un mélange de 40 à 70 % en poids d'un nutriment pour plante contenant un sel de phosphate, et un agent de fixation, pour l'enrobage d'une graine de plante, dans laquelle ladite émulsion ou ladite suspension émulsifiée a un pH de 5 à 7.

9. Procédé pour l'enrobage de graines, **caractérisé en ce que :**
a) des graines destinées à être enrobées sont soumises à un traitement de graines dans un dispositif approprié, et
b) une composition d'enrobage contenant de l'eau et une huile, sous la forme d'une émulsion ou d'une suspension émulsifiée, cette composition d'enrobage comprenant un mélange de 40 à 70 % en poids d'un nutriment pour plante contenant un sel de phosphate, et un agent de fixation, est ajoutée pour former un enrobage sur la surface des graines.
